# EUROPÄISCHE PATENTSCHRIFT

(11) **EP 3 592 992 B1**
(45) Veröffentlichungstag und Bekanntmachung des Hinweises auf die Patenterteilung: **01.09.2021**
(21) Anmeldenummer: 18707004.0
(22) Anmeldetag: 21.02.2018
(51) Int. Cl.: F16B 5/02

(54) **BEFESTIGUNGSANORDNUNG ZUR BEFESTIGUNG WENIGSTENS EINER KOMPONENTE AN EINEM GERÄT**
SECURING ARRANGEMENT FOR SECURING AT LEAST ONE COMPONENT TO AN APPLIANCE
ENSEMBLE DE FIXATION SERVANT À FIXER AU MOINS UN COMPOSANT SUR UN APPAREIL

(30) Priorität: 10.03.2017 DE 102017002357
(43) Veröffentlichungstag der Anmeldung: 15.01.2020
(73) Patentinhaber: ZF CV Systems Hannover GmbH, 30453 Hannover (DE)
(72) Erfinder: KNOKE, Stefan, 30657 Hannover (DE); WUSTRACK, Tobias, 30890 Barsinghausen (DE)
(74) Vertreter: Rabe, Dirk-Heinrich
(86) Internationale Anmeldenummer: PCT/EP2018/054208
(87) Internationale Veröffentlichungsnummer: WO 2018/162230

(56) Entgegenhaltungen:
- US-A- 5 730 210
- US-A1- 2007 211 437
- US-A1- 2016 073 549

## Beschreibung

Die Erfindung betrifft eine Befestigungsanordnung für wenigstens eine Komponente an einem Gerät, aufweisend ein bereichsweise verformbares Befestigungselement, welches zur weitgehend spielfreien und formschlüssigen und/oder kraftschlüssigen Anbindung der wenigstens einen Komponente an das Gerät ausgebildet ist.

Die Offenlegungsschrift DE 31 20 117 A1 beschreibt ein Magnetsystem für ein Relais mit einem winkelförmigen Joch, dessen parallel zur Spulenachse angeordneter Jochschenkel beiderseits in Längsnuten eines Grundkörpers steckbar befestigt ist, wobei auf der der Spule zugewandten Seite des Jochschenkels ein Halteblech aus elastischem Metall angeordnet ist, das sich mit seinem Mittelteil am Jochschenkel abstützt und mit aufgebogenen Seitenteilen beiderseits in Längsnuten des Grundkörpers verspannt ist. Das Halteblech besitzt an beiden Seitenteilen in Einsteckrichtung des Jochschenkels aufgebogene Kufen, welche das Einstecken von Joch und Halteblech erleichtern sollen. Als zweckmäßig wird angesehen, wenn das Halteblech zumindest an einem Seitenteil eine entgegen der Einsteckrichtung des Joches aufgebogene, in eine Ausnehmung des Grundkörpers einrastbare Ecke aufweist. Hierdurch ist eine formschlüssige Halterung des Halteblechs entgegen der Einsteckrichtung des Jochs gegeben.

Die DE 101 28 759 C1 offenbart ein Verfahren und eine Einrichtung zum gegenseitigen Festlegen von Spannblechen bei induktiven Bauelementen, beispielsweise zum Fixieren des Magnetkerns eines Transformators, eines Wandlers, einer Drossel, eines Filters oder eines sonstigen induktiven Bauelements über dafür vorgesehene Spannbleche, für das eine mechanische Fügetechnik, nämlich Clinchen oder Stanznieten, zur Anwendung kommt. Hierdurch wird eine unlösbare Festlegung der Spannbleche aneinander oder gegenüber sonstigen Tragkörpern erreicht. Diese Art der Festlegung geschieht ohne zusätzliche Spannelemente und ohne aufwendige konstruktive Ausgestaltung an den Spannblechen.

In der DE 1 841 487 U1 ist eine Anordnung zur Befestigung eines als Fassung für die Kontaktfedern eines Relais dienenden Isolierkörpers an einem plattenförmigen Bauteil, beispielsweise einem Jochteil des magnetischen Kreises, des Relais, offenbart, bei der ein aus der auf dem plattenförmigen Bauteil aufliegenden Fläche des Isolierkörpers vorspringender und durch eine entsprechende Öffnung des plattenförmigen Bauteils mit geringem Spiel hindurchragender Steg mit rechteckigem Querschnitt nahe seinem freien Ende auf mindestens zwei gegenüberliegenden Flanken Nuten aufweist, in welche die Lappen einer sich auf dem plattenförmigen Bauteil abstützenden Spannfeder derart federnd eingreifen, dass dadurch die Auflagefläche des Isolierkörpers gegen das plattenförmigen Bauteil gepresst wird.

Die US 5 730 210 A zeigt eine weitere vorbekannte Befestigungsanordnung.

Vor diesem Hintergrund liegt der Erfindung die Aufgabe zugrunde, eine kraftund formschlüssige Befestigungsanordnung vorzustellen, welche beispielsweise zur Befestigung von wenigstens einem Magnetregelventil an einem Getriebesteller eines automatisierten Schaltgetriebes nutzbar ist, und die einfach konstruiert ist sowie sich einfach montieren lässt.

Gelöst wird diese Aufgabe mit einer Befestigungsanordnung für wenigstens eine Komponente an einem Gerät, aufweisend ein bereichsweise verformbares Befestigungselement, welches zur weitgehend spielfreien und formschlüssigen und/oder kraftschlüssigen Anbindung der wenigstens einen Komponente an das Gerät ausgebildet ist. Gemäß der Erfindung ist bei dieser Befestigungsanordnung vorgesehen, dass das Befestigungselement aus einer Platte besteht, dass das Befestigungselement zwischen wenigstens einem umlaufenden, ungeschwächten Aufnahmebereich und wenigstens einem auf einer Oberfläche der Komponente aufliegenden Druck- und Zentrierbereich Schwächungsbereiche und Deformationszonen aufweist, dass die wenigstens eine Komponente an einem Aufnahmebereich des Geräts angeordnet ist, dass sich von dem Aufnahmebereich des Geräts mehrere Abstandshalter bis unterhalb der Höhe der Oberfläche der wenigstens einen Komponente erstrecken, und dass der wenigstens eine ungeschwächte Aufnahmebereich des als Platte ausgebildeten Befestigungselements mittels Schrauben derart gegen die Abstandshalter verspannbar ist, dass sich die Deformationszonen verformen und der auf der Oberfläche der wenigstens einen Komponente aufliegende Druck- und Zentrierbereich die Komponente form- und/oder kraftschlüssig am Gerät fixiert.

Die Befestigungsanordnung besteht somit aus wenigen Teilen, nämlich aus den Abstandshaltern zwischen dem Gerät und dem Befestigungselement sowie Schrauben zum Verspannen und Verformen des Befestigungselements auf einer Oberfläche der Komponente sowie gegen das Gerät. Durch die Verformung beim Verspannen des Befestigungselements, die der Oberfläche der Komponente angepasst ist, ergibt sich die sowohl kraftschlüssige als auch formschlüssige Befestigung der Komponente an dem Gerät.

Um die kraftschlüssige und formschlüssige Befestigung der Komponente am Gerät zu erreichen ist bevorzugt vorgesehen, dass die erwähnten Schwächungsbereiche des als Platte ausgebildeten Befestigungselements als längliche Durchbrechungen ausgebildet sind, welche um den oder die Druck- und Zentrierbereiche herum angeordnet sind, und dass diese Schwächungsbereiche durch mehrere als Stege ausgebildete Deformationszonen voneinander beabstandet sind, welche zwischen den Druck- und Zentrierbereichen sowie einem als Spannrahmen ausgebildeten äußeren, ungeschwächten Aufnahmebereich angeordnet sind. Anstelle von länglichen Durchbrechungen in der Platte können auch runde Durchbrechungen, beispielsweise Bohrungen, vorgesehen sein, zwischen denen die erwähnten Stege angeordnet sind.

Das als Platte ausgebildete Befestigungselement kann beispielsweise aus einer Blechplatte bestehen, in die als Durchbrechungen ausgeführte Schwächungsbereiche durch Ausstanzen eingebracht sind.

Gemäß einer anderen Ausführungsform kann vorgesehen sein, dass der Schwächungsbereich des als Platte ausgebildeten Befestigungselements als eine zwischen den Druck- und Zentrierbereichen und dem Spannrahmen angeordnete umlaufende Nut ausgebildet ist, wobei deren Nutgrund die Deformationszone bildet, welcher eine geringere Dicke aufweist als der Druck- und Zentrierbereich sowie der Spannrahmen. Mit dem Begriff Nutgrund ist hier nicht die Oberfläche der tiefsten Stelle der Nut gemeint, sondern der unter der Nut verbliebene restliche Materialbereich des als Platte ausgebildeten Befestigungselements.

Das als Platte ausgebildete Befestigungselement kann aus einer Blechplatte oder einer faserverstärkten Kunststoffplatte bestehen, in welche die als Schwächungsbereich ausgebildete Nut umlaufende Nut durch Fräsen oder Prägen oder durch Spritzgießformen des als Kunststoffplatte ausgebildeten Befestigungselements eingebracht sein.

Die erwähnten Strukturen der Befestigungsanordnung lassen sich auf einfache Weise auch zur formschlüssigen und/oder kraftschlüssigen Befestigung von mehreren Komponenten an einem Gerät ausbilden. In diesem Fall weist die Befestigungsanordnung ein Befestigungselement in Form einer Platte mit mehreren Schwächungsbereichen in Form von Durchbrechungen oder in Form von Nuten und mit mehreren Deformationszonen in Form von Stegen oder Nutgründen auf. Diese Schwächungsbereiche und Deformationszonen sind zwischen mehreren Druck- und Zentrierbereichen sowie einen jeden der mehreren Druckund Zentrierbereiche, deren Schwächungsbereiche und Deformationszonen umgreifenden Spannrahmen angeordnet. Die Druck- und Zentrierbereiche sind hierbei gegen eine Mehrzahl von Abstandshaltern mittels Schrauben verspannbar.

Die eingangs erwähnte Aufgabe wird des Weiteren durch einen Getriebesteller für ein automatisiertes Schaltgetriebe gelöst, welcher eine Befestigungsanordnung der vorstehend definierten Art aufweist.

Ferner wird die vorstehend definierte Aufgabe auch durch die Verwendung einer Befestigungsanordnung der vorstehend definierten Art zur Befestigung eines Getriebestellers an einem automatisierten Schaltgetriebe für Nutzkraftwagen gelöst.

Die Erfindung wird nachstehend anhand mehrerer in der Zeichnung dargestellter Ausführungsbeispiele näher erläutert. In der Zeichnung zeigt
Fig. 1 eine seitliche Schnittansicht einer Befestigungsanordnung gemäß der Erfindung in einer ersten Ausführungsform vor dem Verspannen eines Befestigungselements gegen eine Komponente an einem Gerät,
Fig. 2 die seitliche Schnittansicht der Befestigungsanordnung gemäß Fig. 1 nach dem Verspannen des Befestigungselements gegen die Komponente an einem Gerät,
Fig. 3 eine perspektivische Darstellung der Ausführungsform gemäß den Figuren 1 und 2 nach dem Verspannen des Befestigungselements gegen eine Komponente,
Fig. 4 eine perspektivische Darstellung einer zweiten Ausführungsform einer Befestigungsanordnung zur Befestigung von neun Komponenten an einem Gerät,
Fig. 5 eine seitliche Schnittansicht einer Befestigungsanordnung gemäß der Erfindung in einer dritten Ausführungsform vor dem Verspannen des Befestigungselements gegen die Komponente an dem Gerät, und
Fig. 6 eine seitliche Schnittansicht der Befestigungsanordnung gemäß Fig. 5 nach dem Verspannen und Verformen des Befestigungselements gegen die Komponente an dem Gerät.

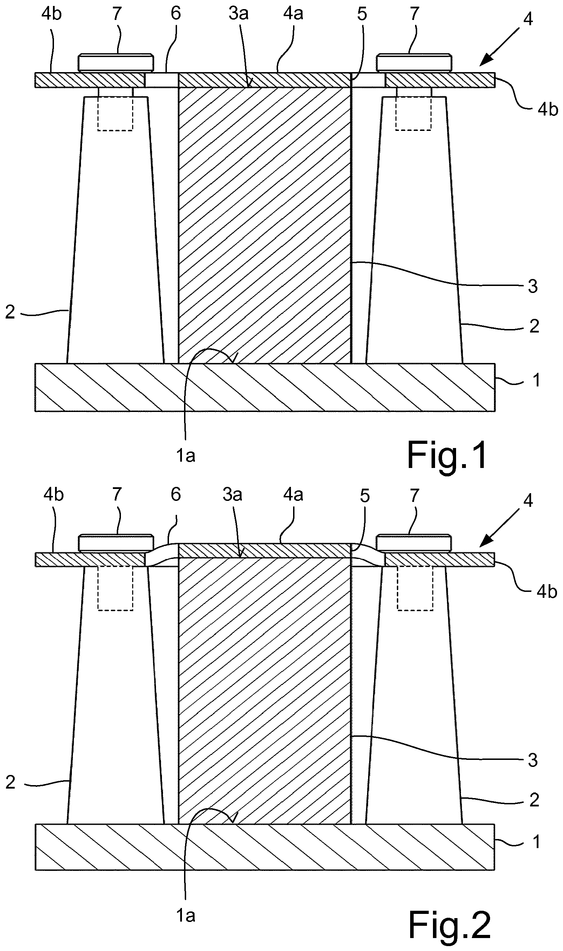

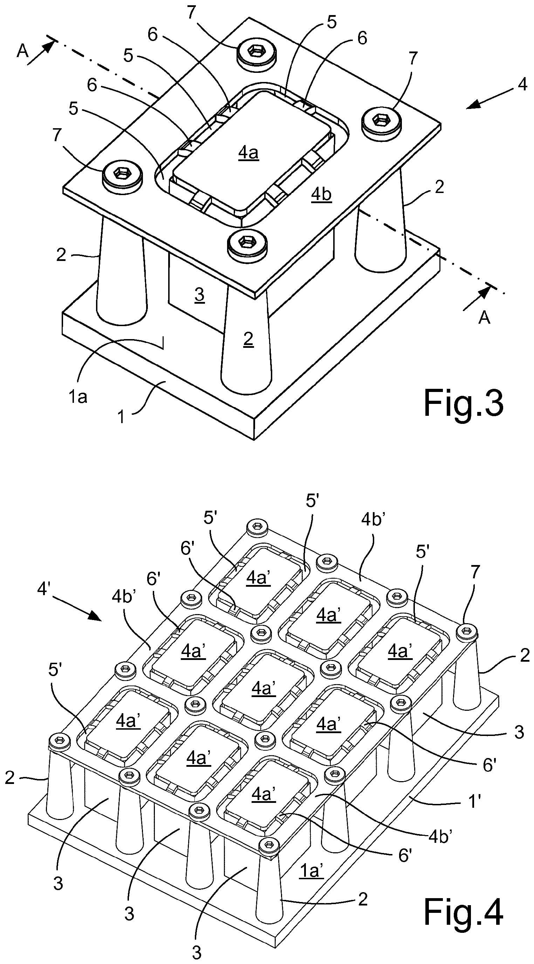

Die Fig. 1 zeigt demnach eine Befestigungsanordnung für eine an einem Gerät 1 zu befestigende Komponente 3, welche beispielsweise ein Magnetregelventil an einem Getriebesteller in einem automatisierten Schaltgetriebe für Nutzkraftwagen sein kann. Die für die Fig. 1 gewählte Schnittebene A-A ist in Fig. 3 erkennbar. Die an einem ebenen Bereich 1a des Geräts 1 zu befestigende Komponente 3 ist zwischen vier gleichmäßig beabstandeten, säulenförmigen Abstandshaltern 2 angeordnet, deren Höhe geringfügig kleiner als die Höhe der zu befestigenden Komponente 3 ist.

Beim Ausführungsbeispiel gemäß den Figuren 1 bis 4 ist das Befestigungselement 4, 4' als Blechplatte ausgebildet, in die um die zu befestigende Komponente 3 umlaufende Durchbrechungen 5, 5', die einen Schwächungsbereich des als Blechplatte ausgebildeten Befestigungselements 4, 4' bilden, ausgestanzt oder auf andere geeignete Weise eingebracht sind. Diese Durchbrechungen 5, 5' weisen eine begrenzte Länge auf und sind durch als Stege 6, 6' ausgebildete Deformationszonen mit einem auf einer Oberfläche 3a der zu befestigenden Komponente 3 aufliegenden Druck- und Zentrierbereich 4a, 4a' und einem diesen Druck- und Zentrierbereich 4a, 4a' umgreifenden Spannrahmen 4b, 4b' verbunden. Dieser Spannrahmen 4b, 4b' bildet einen äußeren, ungeschwächten Aufnahmebereich.

Wie Fig. 1 zeigt, ist das als Blechplatte ausgebildete Befestigungselement 4 vor dem Verspannvorgang zunächst eben und liegt nur mit seinem Druck- und Zentrierbereich 4a auf der Oberfläche 3a der zu befestigenden Komponente 3 auf, so dass der als Spannrahmen 4b ausgebildete äußere, ungeschwächte Aufnahmebereich des als Blechplatte ausgebildeten Befestigungselements 4 einen definierten Abstand zum oberen Ende der Abstandshalter 2 aufweist. Werden die Schrauben 7 wie in Fig. 2 dargestellt angezogen, so wird der als Spannrahmen 4b ausgebildete äußere, ungeschwächte Aufnahmebereich gegen das oberen Ende der Abstandshalter 2 durch die Schrauben 7 gepresst, so dass sich die aus den Stegen 6 gebildete Deformationszone verformt. Im Ergebnis wird dabei der Druck- und Zentrierbereich 4a mit einer auch von der Geometrie der Stege 6 abhängigen Kraft gegen die Oberfläche 3a der zu befestigenden Komponente 3 gepresst.

Aus Fig. 2 ist ersichtlich, dass sich durch die Verformung der aus den Stegen 6 gebildeten Deformationszone 6, zusätzlich zu der kraftschlüssigen Verbindung über den Druck- und Zentrierbereich 4a, eine formschlüssige Fixierung der zu befestigenden Komponente 3 ergibt, so dass eine formschlüssige und kraftschlüssige Verbindung der zu befestigenden Komponente 3 am Gerät 1 resultiert, ohne die zu befestigende Komponente 3 mechanisch zu überbeanspruchen.

Die Befestigungsanordnung gemäß Fig. 4 ist analog zu der Befestigungsanordnung gemäß Fig. 3 aufgebaut und umfasst ein Gerät 1' mit sechzehn gleichmäßig zueinander beabstandeten, säulenförmigen Abstandshaltern 2 für neun zu befestigende Komponenten 3. Hierzu ist ein Befestigungselement 4' vorgesehen, das neun gleichmäßig verteilt angeordnete Druck- und Zentrierbereiche 4a' aufweist. Diese Druck- und Zentrierbereiche 4a' sind über eine Mehrzahl von Deformationszonen 6' bildenden Stegen mit einem Spannrahmen 4b' unter Freilassung von Schwächungsbereiche 5' bildenden Durchbrechungen verbunden. Beim Verspannen dieses Spannrahmens 4b' für eine Mehrzahl von zu befestigenden Komponenten 3 wird durch Anziehen der Schrauben 7 in den Abstandshaltern 2 der Spannrahmens 4b' gegen die Komponenten 3 verspannt und ergibt die sowohl aus Fig. 4 als auch aus Fig. 2 ersichtliche Verformung der Druck- und Zentrierbereiche 4a' gegenüber dem Spannrahmen 4b' für die zu befestigenden Komponenten 3 mit den bereits genannten Vorteilen.

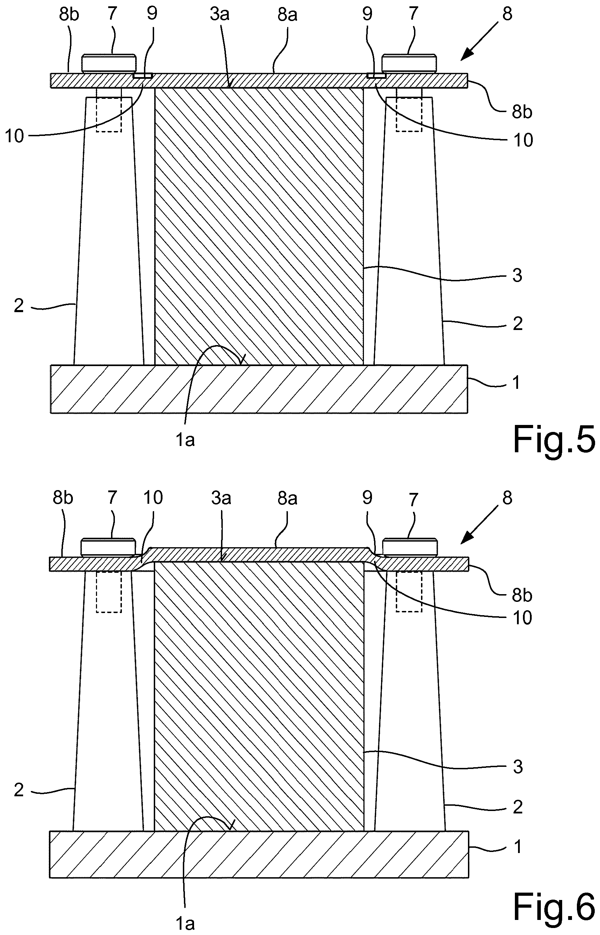

Anstatt der in den Figuren 1 bis 4 gezeigten ausgestanzten Durchbrechungen 5, 5' kann gemäß dem in den Figuren 5 und 6 dargestellten Ausführungsbeispiel der Schwächungsbereich an einem plattenförmigen Befestigungselement 8 aus einer umlaufenden Nut 9 bestehen, welche beispielsweise in dessen komponentenfernen Oberseite ausgebildet ist. Diese Nut 9 umgreift die obere Anlagefläche beziehungsweise Oberfläche 3a der zu befestigenden Komponente 3 und begrenzt dadurch den Druck- und Zentrierbereich 8a des Befestigungselements 8. Wie Fig. 5 zeigt, bildet der unter der Nut 9 verbliebene Materialrest des Befestigungselements 8 einen dünnen Nutgrund 10, welcher eine Deformationszone darstellt. Dieser Nutgrund 10 weist eine geeignete geringere Dicke auf als der unmittelbar benachbarte Bereich, wobei der Nutgrund 10 in diesem Ausführungsbeispiel etwa halb so dick ist wie der Rest des plattenförmigen Befestigungselements 8. Die Verformung dieser Deformationszone beziehungsweise des Nutgrunds 10 nach dem Anziehen der Schrauben 7 ist in Fig. 6 dargestellt.

Die beschriebenen plattenförmigen Befestigungselemente 4, 4', 8 können als Blechplatte mit eingestanzten Durchbrechungen 5, 5' oder mit eingefrästen Nuten 9 ausgeführt sein. Es ist aber auch möglich, die Befestigungselemente 4, 4', 8 als Kunststoffformteile auszubilden, in welche die Durchbrechungen 5, 5' oder die Nut 9 durch entsprechende Ausbildung der für die Herstellung benötigten Spritzgussformen eingeformt sind.

## Patentansprüche

1. Befestigungsanordnung für wenigstens eine Komponente (3) an einem Gerät (1, 1'), wobei die wenigstens eine Komponente (3) an einem Aufnahmebereich (1a) des Geräts (1) angeordnet ist,
wobei die Befestigungsanordnung ein bereichsweise verformbares Befestigungselement (4, 4', 8) aufweist, welches zur weitgehend spielfreien und formschlüssigen und/oder kraftschlüssigen Anbindung der wenigstens einen Komponente (3) an das Gerät (1, 1') ausgebildet ist,
**dadurch gekennzeichnet,**
- **dass** das Befestigungselement (4, 4', 8) aus einer Platte besteht,
- **dass** das Befestigungselement (4, 4', 8) zwischen wenigstens einem umlaufenden, ungeschwächten Aufnahmebereich (4b, 4b', 8b) und wenigstens einem auf einer Oberfläche (3a) der Komponente (3) auflegbaren Druck- und Zentrierbereich (4a, 4a', 8a) Schwächungsbereiche (5, 5', 9) und Deformationszonen (6, 6', 10) aufweist,
- **dass** die Befestigungsanordnung mehrere Abstandshalter (2) aufweist und die mehreren Abstandshalter (2) sich von dem Aufnahmebereich (1a) des Geräts (1) bis unterhalb der Höhe der Oberfläche (3a) der wenigstens einen Komponente (3) erstrecken können, und
- **dass** die Befestigungsanordnung Schrauben (7) aufweist und der wenigstens eine ungeschwächte Aufnahmebereich (4b, 4b', 8b) des als Platte ausgebildeten Befestigungselements (4, 4', 8b) mittels der Schrauben (7) derart gegen die Abstandshalter (2) verspannbar ist, dass sich die Deformationszonen (6, 6', 10) verformen und der auf der Oberfläche (3a) der wenigstens einen Komponente (3) auflegbare Druck- und Zentrierbereich (4a, 4a', 8a) die Komponente (3) form- und/oder kraftschlüssig am Gerät (1) fixiert.

2. Befestigungsanordnung nach Anspruch 1, **dadurch gekennzeichnet, dass** die Schwächungsbereiche (5, 5') des als Platte ausgebildeten Befestigungselements (4, 4') als längliche Durchbrechungen ausgebildet sind, welche um den oder die Druck- und Zentrierbereiche (4a, 4a') herum angeordnet sind, und dass die Schwächungsbereiche (5, 5') durch mehrere als Stege ausgebildete Deformationszonen (6, 6') voneinander beabstandet sind, welche zwischen den Druck- und Zentrierbereichen (4a, 4a') sowie einem als Spannrahmen ausgebildeten äußeren, ungeschwächten Aufnahmebereich (4b, 4b') angeordnet sind.

3. Befestigungsanordnung nach Anspruch 2, **dadurch gekennzeichnet, dass** das Befestigungselement (4, 4') aus einer Blechplatte besteht, in die als Durchbrechungen ausgeführten Schwächungsbereiche (5, 5') durch Ausstanzen erzeugt sind.

4. Befestigungsanordnung nach einem der Ansprüche 2 und 3, **dadurch gekennzeichnet, dass** der Schwächungsbereich (9) des als Platte ausgebildeten Befestigungselements (8) als eine zwischen den Druck- und Zentrierbereichen (8a) und dem Spannrahmen (8b) angeordnete umlaufende Nut ausgebildet ist, wobei deren Nutgrund (10) die Deformationszone bildet, welcher eine geringere Dicke aufweist als der Druck- und Zentrierbereich (8a) sowie der Spannrahmen (8b).

5. Befestigungsanordnung nach Anspruch 4, **dadurch gekennzeichnet, dass** das als Platte ausgebildete Befestigungselement (8) aus einer Blechplatte oder einer faserverstärkten Kunststoffplatte besteht, in welche die als Schwächungsbereich (9) ausgebildete umlaufende Nut durch Fräsen oder Prägen oder durch Spritzgussformen des als Kunststoffplatte ausgebildeten Befestigungselements (8) eingebracht ist.

6. Befestigungsanordnung nach einem der Ansprüche 2 bis 5, **dadurch gekennzeichnet,**
**dass** diese zur form- und/oder kraftschlüssigen Befestigung von mehreren Komponenten (3) an einem Gerät (1') ausgebildet ist, aufweisend ein Befestigungselement (4') in Form einer Platte mit mehreren Schwächungsbereichen (5'; 9) in Form von Durchbrechungen oder in Form von Nuten und mit mehreren Deformationszonen (6', 10) in Form von Stegen oder Nutgründen zwischen mehreren Druck- und Zentrierbereich en (4a', 8a) sowie aufweisend einen jeden der mehreren Druck- und Zentrierbereiche (4a', 8a),
deren Schwächungsbereiche (5'; 9) und Deformationszonen (6'; 10) umgreifenden Spannrahmen (4a', 8), wobei die Druck- und Zentrierbereiche (4a', 8a) gegen die Mehrzahl von Abstandshaltern (2) mittels der Schrauben (7) verspannbar ist.

7. Getriebesteller (1) in einem automatisierten Getriebe für Nutzkraftwagen mit einer Befestigungsanordnung mit den Merkmalen von einem oder mehreren der Ansprüche 1 bis 6.

8. Verwendung einer Befestigungsanordnung nach einem oder mehreren der Ansprüche 1 bis 6 zur Befestigung eines Getriebestellers (1) an einem automatisierten Schaltgetriebe für Nutzkraftwagen.

## Claims

1. A securing arrangement for securing at least one component (3) to an appliance (1, 1'), wherein the at least one component (3) is arranged on a receiving region (1a) of the appliance (1),
wherein the securing arrangement has a securing element (4, 4', 8) that is deformable in certain areas which is embodied for extensively backlash-free and positive and/or non-positive connection of the at least one component (3) to the appliance (1, 1'),
**characterized in that**
- the securing element (4, 4', 8) consists of a plate,
- the securing element (4, 4', 8) has weakened regions (5, 5', 9) and deformation zones (6, 6', 10) between at least one circumferential, unweakened receiving region (4b, 4b',8b) and at least one pressure and centering region (4a, 4a', 8a) that can be placed on a surface (3a) of the component (3),
- the securing arrangement has a plurality of spacers (2) and the plurality of spacers (2) can extend from the receiving region (1a) of the appliance (1) to below the height of the surface (3a) of the at least one component (3), and
- the securing arrangement has screws (7) and the at least one unweakened receiving region (4b, 4b', 8b) of the securing element (4, 4', 8b) embodied as a plate can be braced by means of the screws (7) against the spacers (2) such that the deformation zones (6, 6', 10) deform and the pressure and centering region (4a, 4a', 8a) that can be placed on the surface (3a) of the at least one component (3) fixes the component (3) positively and/or non-positively on the appliance (1).

2. The securing arrangement according to claim 1, **characterized in that** the weakened regions (5, 5') of the securing element (4, 4') embodied as a plate are embodied as oblong perforations, which are arranged around the pressure and centering regions (4a, 4a') and that the weakened regions (5, 5') are spaced apart from one another by a plurality of deformation zones (6, 6') embodied as webs, which are arranged between the pressure and centering regions (4a, 4a') as well as an external, unweakened receiving region (4b, 4b') embodied as a clamping frame.

3. The securing arrangement according to claim 2, **characterized in that** the securing element (4, 4') consists of a sheet-metal plate into which the weakened regions (5, 5') designed as perforations are created by punching.

4. The securing arrangement according to any of claims 2 and 3, **characterized in that** the weakened area (9) of the securing element (8) embodied as a plate is embodied as a circumferential groove arranged between the pressure and centering regions (8a) and the clamping frame (8b), wherein the groove base (10) forms the deformation zone, which has a lesser thickness than the pressure and centering region (8a) and the clamping frame (8b).

5. The securing arrangement according to claim 4, **characterized in that** the securing element (8) embodied as a plate consists of a sheet-metal plate or a fiber-reinforced plastic plate, into which the circumferential groove embodied as a weakened region (9) is introduced by milling or embossing or by injection molding of the securing element (8) embodied as a plastic plate.

6. The securing arrangement according to any of claims 2 to 5, **characterized in that**
it is embodied for positive and/or non-positive securing of a plurality of components (3) to an appliance (1'), having a securing element (4') in the form of a plate with a plurality of weakened regions (5'; 9) in the form of perforations or in the form of grooves and having a plurality of deformation zones (6', 10) in the form of webs or groove bases between a plurality of pressure and centering regions (4a', 8a) as well as having a clamping frame (4a', 8) encompassing each of the plurality of pressure and centering regions (4a', 8a), their weakened regions (5'; 9) and deformation zones (6'; 10), wherein the pressure and centering regions (4a', 8a) can be braced against the plurality of spacers (2) by means of the screws (7).

7. A transmission actuator (1) in an automated transmission for commercial vehicles having a securing arrangement with the features of one or more of claims 1 to 6.

8. The use of a securing arrangement according to one or more of claims 1 to 6 for securing a transmission actuator (1) to an automated transmission for commercial vehicles.

## Revendications

1. Ensemble de fixation pour au moins un composant (3) sur un appareil (1, 1'), dans lequel le au moins un composant (3) est disposé sur une zone de réception (1a) de l'appareil (1),
dans lequel l'ensemble de fixation présente un élément de fixation (4, 4', 8) déformable par endroits, lequel est réalisé pour le raccordement en grande partie sans jeu et par coopération de formes et/ou à force du au moins un composant (3) à l'appareil (1, 1'),
**caractérisé en ce**
- **que** l'élément de fixation (4, 4', 8) est constitué d'une plaque,
- **que** l'élément de fixation (4, 4', 8) présente entre au moins une zone de réception sans affaiblissement (4b, 4b', 8b) périphérique et au moins une zone de pression et de centrage (4a, 4a', 8a) pouvant être placée sur une surface (3a) du composant (3) des zones d'affaiblissement (5, 5', 9) et zones de déformation (6, 6', 10),
- **que** l'ensemble de fixation présente plusieurs écarteurs (2) et les différents écarteurs (2) peuvent s'étendre à partir de la zone de réception (1a) de l'appareil (1) jusqu'au-dessous de la hauteur de la surface (3a) du au moins un composant (3), et
- **que** l'ensemble de fixation présente des vis (7) et la au moins une zone de réception sans affaiblissement (4b, 4b', 8b) de l'élément de fixation (4, 4', 8b) réalisé sous la forme d'une plaque peut être serrée contre les écarteurs (2) au moyen des vis (7), de telle sorte que les zones de déformation (6, 6', 10) se déforment et la zone de pression et de centrage (4a, 4a', 8a) pouvant être placée sur la surface (3a) du au moins un composant (3) fixe le composant (3) sur l'appareil (1) par coopération de formes et/ou à force.

2. Ensemble de fixation selon la revendication 1, **caractérisé en ce que** les zones d'affaiblissement (5, 5') de l'élément de fixation (4, 4') réalisé sous la forme d'une plaque sont réalisées sous la forme de perforations allongées, lesquelles sont disposées autour de la ou des zones de pression et de centrage (4a, 4a'), et que les zones d'affaiblissement (5, 5') sont espacées les unes des autres par plusieurs zones de déformation (6, 6') réalisées sous la forme de nervures, lesquelles sont disposées entre les zones de pression et de centrage (4a, 4a') ainsi qu'une zone de réception sans affaiblissement (4b, 4b') extérieure, réalisée sous la forme d'un cadre de serrage.

3. Ensemble de fixation selon la revendication 2, **caractérisé en ce que** l'élément de fixation (4, 4') est constitué d'une plaque de tôle, dans laquelle des zones d'affaiblissement (5, 5') conçues sous la forme de perforations sont produites par poinçonnage.

4. Ensemble de fixation selon l'une quelconque des revendications 2 et 3, **caractérisé en ce que** la zone d'affaiblissement (9) de l'élément de fixation (8) réalisé sous la forme d'une plaque est réalisée sous la forme d'une rainure périphérique disposée entre les zones de pression et de centrage (8a) et le cadre de serrage (8b), dans lequel la base de rainure (10) de celle-ci forme la zone de déformation, laquelle présente une épaisseur plus petite que la zone de pression et de centrage (8a) ainsi que le cadre de serrage (8b).

5. Ensemble de fixation selon la revendication 4, **caractérisé en ce que** l'élément de fixation (8) réalisé sous la forme d'une plaque est constitué d'une plaque de tôle ou d'une plaque de matière plastique renforcée par des fibres, dans laquelle la rainure périphérique réalisée sous la forme d'une zone d'affaiblissement (9) est ménagée par fraisage ou estampage ou par moulage par injection de l'élément de fixation (8) réalisé sous la forme d'une plaque de matière plastique.

6. Ensemble de fixation selon l'une quelconque des revendications 2 à 5, **caractérisé en ce**
**que** celui-ci est réalisé pour la fixation par coopération de formes et/ou à force de plusieurs composants (3) sur un appareil (1'), présentant un élément de fixation (4') sous forme d'une plaque avec plusieurs zones d'affaiblissement (5' ; 9) sous forme de perforations ou sous forme de rainures et avec plusieurs zones de déformation (6', 10) sous forme de nervures ou fonds de rainure entre plusieurs zones de pression et de centrage (4a', 8a) ainsi que présentant un cadre de serrage (4a', 8) entourant chacune des différentes zones de pression et de centrage (4a', 8a), les zones d'affaiblissement (5' ; 9) et zones de déformation (6', 10) de celles-ci, dans lequel les zones de pression et de centrage (4a', 8a) peuvent être serrées contre la pluralité d'écarteurs (2) au moyen des vis (7).

7. Organe de commande des vitesses (1) dans une boîte de vitesses automatisée pour voitures utilitaires avec un ensemble de fixation avec les caractéristiques d'une ou plusieurs des revendications 1 à 6.

8. Utilisation d'un ensemble de fixation selon l'une ou plusieurs des revendications 1 à 6 pour la fixation d'un organe de commande des vitesses (1) sur une boîte de vitesses automatisée pour voitures utilitaires.
